# DEMANDE DE BREVET EUROPEEN

(11) **EP 1 489 310 A1**
(43) Date de publication de la demande: **22.12.2004**
(21) Numéro de dépôt: 04405378.3
(22) Date de dépôt: 18.06.2004
(51) Int. Cl.: F16B 7/04

(54) **Dispositif de liaison de deux éléments, notamment tubulaires**

(30) Priorité: 19.06.2003 CH 20031072
(71) Demandeur: Joncourt, François, 3084 Wabern (CH)
(72) Inventeur: Joncourt, François, 3084 Wabern (CH)
(74) Mandataire: AMMANN INGENIEURS-CONSEILS EN PROPRIETE INTELLECTUELLE SA BERNE

(57) **Abrégé**

Le dispositif de liaison (10), notamment de deux éléments tubulaires (1, 2) mâle/femelle, est formé de premiers moyens (11) permettant une liaison en rotation des deux éléments l'un par rapport à l'autre et de seconds moyens (15) permettant une liaison en translation desdits éléments. Les premiers moyens (11) comportent une saignée (12,13) pratiquée dans l'élément (1) et un moyen d'arrêt (14) agencé dans l'élément (2). Les seconds moyens (15) sont formés d'un système d'au moins une sangle (20) reliée à l'élément (2) et d'au moins une boucle (16) reliée à l'élément (1).

## Description

La présente invention porte sur un dispositif de liaison ou d'assemblage mécanique de deux éléments entre eux selon le préambule de la revendication indépendante 1, notamment deux éléments tubulaires.

Les domaines d'application pour ces dispositifs sont des plus divers. On peut noter, entre autres, le montage rapide de parasols, de maisonnettes à structures tubulaires, de tentes de camping, de brancards, de chariots de transport de charges pour les randonnées, etc.

Il existe sur le marché divers dispositifs de ce genre, plus particulièrement en vue de la liaison entre eux de deux éléments tubulaires (à base circulaire ou de toute autre forme). On peut citer, à titre d'exemple, outre le système classique de vis-écrou, le dispositif de blocage en translation et en rotation d'un tube mâle et d'un tube femelle destinés à être emmanchés l'un dans l'autre, ce dispositif consistant en une bille logée dans l'enveloppe tubulaire de l'élément mâle et soumise à l'action d'un organe élastique, une calotte définie de cette bille pouvant s'enclipser dans une ouverture de diamètre adapté et pratiquée dans le tube femelle. L'emmanchement est simple et rapide puisqu'il suffit d'introduire le tube mâle dans le tube femelle jusqu'à ce que la calotte de la bille vienne contre le bord du tube femelle, puis d'exercer un appui sur la bille contre la force de l'organe élastique et de poursuivre l'introduction jusqu'à ce que la bille se trouve en face de ladite ouverture, moment auquel ladite calotte s'engagera dans cette dernière sous l'action de l'organe élastique pour assurer ainsi une liaison, aussi bien en translation qu'en rotation, des deux tubes entre eux.

D'autres dispositifs prévoient une couronne à rotules de serrage à crans, d'autres encore des moyens auxiliaires constitués de manchons de plastique, etc.

De manière générale, il est toujours souhaitable de pouvoir, d'une part, procéder à la liaison ou à l'assemblage des deux éléments de manière rapide et simple, mais aussi fiable, et, d'autre part, proposer un produit bon marché. Or, eu égard aux dispositifs connus, le problème se pose en ces termes: ou bien le dispositif est fiable et sans doute bon marché, propriétés que peut certainement remplir un système vis-écrou, mais le montage des éléments entre eux devient passablement fastidieux et incommode, alors même qu'il nécessite, de surcroît des outils; ou bien le dispositif est simple et rapide, permettant un assemblage facile et commode, propriétés que peut certainement remplir un système à bille tel que celui évoqué plus haut, mais il est notoire que l'assemblage obtenu pèche par une fiabilité médiocre et aléatoire. Dans le droit fil de ces inconvénients surgissent d'autres lors du démontage ou désassemblage desdits éléments, puisque ces opérations peuvent s'avérer difficile et conduire même à la destruction du dispositif d'assemblage, cela à raison des effets corrosifs provoqués par le temps ou l'environnement (rouille, grippage dû au sable ou la boue, etc.).

Le but de la présente invention est de réaliser un dispositif de liaison mécanique qui ne soit pas affecté des inconvénients décrits plus haut.

Ce but est atteint grâce à la mise en oeuvre des moyens définis dans la partie caractérisante de la revendication 1, les moyens définis dans les revendications dépendantes permettant de réaliser l'invention à bon compte et selon des constructions préférentielles.

Le dispositif revendiqué permet de fait un montage et un démontage des éléments de manière rapide, simple, efficace et fiable quelles que soient les conditions météorologiques. Il est de surcroît léger, non encombrant et indéformable. Enfin, il n'exige aucun entretien et peut être produit à très bon compte.

Un exemple d'exécution va être décrit à titre d'exemple non limitatif, à l'appui des dessins annexés dans lesquels
- la figure 1 est une vue de face d'un élément mâle comportant une partie des moyens du dispositif de liaison,
- la figure 2 est une vue en perspective montrant une partie de l'extrémité de cet élément mâle destinée à être introduite dans un élément femelle et solidarisée avec ce dernier,
- la figure 3 est une vue de face de l'élément femelle comportant l'autre partie des moyens du dispositif de liaison,
- la figure 4 est une vue de bout de l'élément femelle, et
- la figure 5 montre les deux éléments à l'état assemblé ou lié, étant observé que les échelles des différentes figures ne sont pas uniformes.

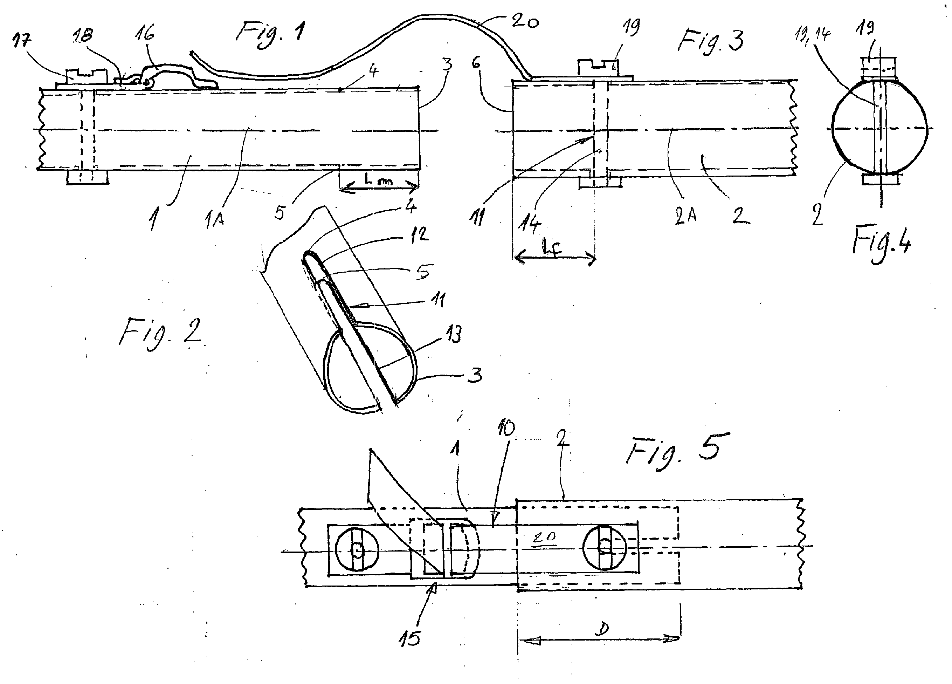

La figure 1 montre la partie terminale de l'élément mâle sous forme de tube 1 d'axe 1A, pourvu d'une partie de premiers moyens (11) du dispositif de liaison (10). Ce tube présente, comme cela ressort mieux de la figure 2, deux entailles ou rainures identiques, l'une supérieure 12, l'autre inférieure 13, ces entailles étant borgnes, c'est-à-dire qu'elles sont pratiquées sur une longueur définie Lₘ à partir d'un bord extérieur 3 sur lequel elles débouchent. Les extrémités arrières 4, 5 des rainures 12, 13 sont de préférence arrondies, de sorte à correspondre au diamètre d'un moyen d'arrêt 14 (Fig. 3) sur lequel on reviendra plus loin. Le plan médian (non référencé) de ces rainures 12, 13 est un plan radial passant par l'axe 1A.

La figure 3 montre la partie terminale d'un élément femelle sous forme de tube 2 d'axe 2A, pourvu notamment de l'autre partie des premiers moyens (11) du dispositif de liaison (10). Cette partie terminale présente en effet le moyen d'arrêt 14 précité devant exercer une fonction de butée, cette dernière se présentant, par exemple, sous forme de tige radiale 14 dont les extrémités (non référencées) sont solidaires de l'enveloppe du tube 2. Cette tige est agencée à une distance L_{f} du bord extérieur 6 du tube 2 et passe par l'axe 2A.

Les diamètres extérieur/intérieur des tubes 1, 2 sont définis de telle que le tube 1 puisse être introduit aisément, donc de préférence avec un très léger jeu, dans le tube 2, cela jusqu'à ce que les extrémités 4, 5 des rainures du tube 1 vienne buter contre la tige 14. On comprend que le tube 1 s'étend alors dans le tube 2 sur une distance D (Fig. 5), celle-ci étant fonction des grandeurs Lₘ et L_{f} et pouvant être déterminée librement par le constructeur, selon des critères spécifiques (par exemple la rigidité).

L'ensemble des éléments rainures 12, 13 et butée 14 formant ainsi des premiers moyens 11 du dispositif de liaison permettent de limiter l'introduction du tube 1 sur ladite distance définie D et d'assurer concomitamment une liaison en rotation des tubes 1, 2 l'un par rapport à l'autre.

Le dispositif de liaison comprend également des seconds moyens 15 permettant, après introduction des deux tubes 1, 2 l'un dans l'autre, selon le mode que nous venons de voir, de lier ceux-ci en translation l'un par rapport à l'autre, donc d'achever le blocage.

De manière avantageuse, ces seconds moyens sont formés d'un système d'attache comportant au moins une sangle coopérant chaque fois avec au moins une boucle. Ainsi, selon une réalisation, ils comprennent, d'une part, sur le tube 2, une sangle flexible 20 fixée à ce dernier, par exemple au moyen d'un système vis-écrou 20. Selon la forme d'exécution décrite, la tige du système vis-écrou 20 (c'est-à-dire de la vis (non spécifiquement référencée)) remplit en même temps le rôle de butée 14. La figure 4, vue dans le sens de l'axe 2A du tube 2, permet de voir la disposition radiale de ces éléments 20, 14. Les seconds moyens comprennent, d'autre part, sur le tube 1, une boucle 16 de type autobloquant connu (représentée que de façon très simplifiée ou symbolique sur les figures 1 et 5 (ainsi, sur cette dernière, la boucle n'est représentée qu'avec une seule traverse)), fixée à ce dernier, par exemple au moyen d'un système vis-écrou 17 par l'intermédiaire d'un brin souple 18 de longueur déterminée, de préférence assez courte, soit de l'ordre de quelques centimètres, de sorte à faciliter les manipulations. Lorsque les deux tubes 1, 2 sont en place, c'est-à-dire introduits l'un dans l'autre, il suffit d'introduire la sangle 20 dans la boucle 16 et de procéder au blocage. Les tubes 1, 2 sont alors totalement immobilisés l'un par rapport à l'autre. La désolidarisation des deux tubes se fait tout aussi simplement et rapidement, en manipulant de manière courante et connue le moyen de blocage en translation, soit, selon l'exemple, la sangle 20 et la boucle 16. Selon une variante, en vue d'assurrer une meilleure sécurité encore de la liaison en translation, un deuxième ensemble sangle/boucle 16/20 pourra être prévu, disposé diamétralement opposé à l'ensemble 16; 20 représenté sur les figures et décrit plus haut.

## Revendications

1. Dispositif de liaison de deux éléments mâle et femelle, l'un s'emmanchant sur une distance dans l'autre, l'élément femelle étant creux ou tubulaire au moins sur ladite distance, ces éléments étant pourvus de moyens de liaison dans leur zone d'emmanchement, **caractérisé en ce que**, d'une part et dans un premier temps, des premiers moyens permettent de limiter et d'assurer, respectivement, l'emmanchement sur ladite distance et une liaison en rotation des deux éléments, ces premiers moyens étant constitués d'un moyen d'arrêt aménagé sur l'un des éléments et coopérant avec un moyen correspondant prévu sur l'autre élément, et que, d'autre part, des seconds moyens permettent d'assurer, dans un second temps, une liaison en translation desdits éléments.

2. Dispositif de liaison selon la revendication 1, **caractérisé en ce que** le moyen d'arrêt est formé d'une tige solidaire de l'élément femelle et traversant ce dernier de part en part, orthogonalement à son axe et sur une longueur définie de son extrémité, et que le moyen correspondant résulte d'une entaille borgne pratiquée dans l'élément mâle sur longueur définie de son extrémité et selon un plan médian passant par l'axe dudit élément mâle.

3. Dispositif de liaison selon la revendication 1 ou 2, **caractérisé en ce que** les seconds moyens sont formés d'un système d'attache comportant au moins une sangle coopérant chaque fois avec ou au moins une boucle.

4. Dispositif de liaison selon la revendication 3, **caractérisé en ce que** le système d'attache comporte, d'une part, une sangle reliée à l'élément femelle par un moyen de retenue et, d'autre part, une boucle reliée à l'élément mâle par un moyen de retenue, de préférence par l'intermédiaire d'un brin souple.

5. Dispositif de liaison selon la revendication 4, **caractérisé en ce que** le moyen de retenue solidarisant la sangle avec l'élément femelle remplit en même temps la fonction du moyen d'arrêt.
